Europäisches Patentamt

European Patent Office

Office européen des brevets

(11) Publication number: **0 148 625 A1**

(12) # EUROPEAN PATENT APPLICATION

(21) Application number: 84308975.6

(22) Date of filing: 20.12.84

(51) Int. Cl.⁴: **A 01 N 53/00**
// (A01N53/00, 53:00)

(30) Priority: 27.12.83 JP 248524/83

(43) Date of publication of application: 17.07.85 Bulletin 85/29

(84) Designated Contracting States: AT BE CH DE FR GB IT LI NL

(71) Applicant: SUMITOMO CHEMICAL COMPANY, LIMITED, 15 Kitahama 5-chome Higashi-ku, Osaka-shi Osaka 541 (JP)

(72) Inventor: Matsunaga, Tadahiro, 1-7, Semiyama Fukiaichoi, Chuo-ku Kobe (JP)
Inventor: Higo, Akio, 5, Higashiawajicho-1-Chome, Higashiyodogawa-Ku Osaka (JP)

(74) Representative: Harrison, David Christopher et al, MEWBURN ELLIS & CO 2/3 Cursitor Street, London EC4A 1BQ (GB)

(54) **Fumigating composition.**

(57) A fumigating composition for exterminating pests contains a mixture of a pyrethroid-type compound of the general formula

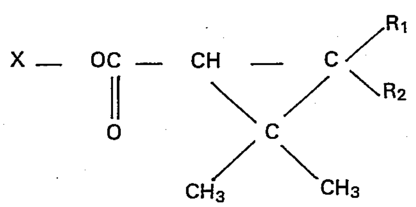

wherein $R_1$ is a hydrogen atom or a methyl group, $R_2$ is a 2-methyl-propenyl group when $R_1$ is a hydrogen atom and a methyl group when $R_1$ is a methyl group, and X is a 2-allyl-3--methyl-cyclopent-2-ene-1-one-4-yl group or a 2-propargyl-3--methylcyclopent-2-ene-1-one-4-yl group; and 2,3,4,5,6-pentafluorobenzyl 2,2-dimethyl-3-(2,2-dichlorovinyl) cyclopropanecarboxylate. The composition has an excellent synergistic effect.

EP 0 148 625 A1

0148625

# FUMIGATING COMPOSITION

This invention relates to a fumigating composition, and more specifically, to a fumigating composition for exterminating pests which contains a pyrethroid-type compound of general formula [I] below and 2,3,4,5,6-pentafluorobenzyl 2,2-dimethyl-3-(2,2-dichlorovinyl)-cyclopropanecarboxylate in a ratio by weight of from 8:2 to 3:7,

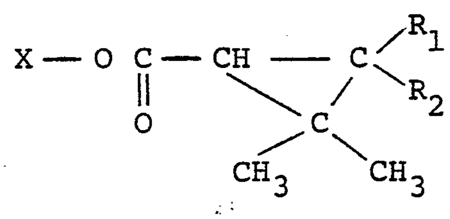

[I]

wherein $R_1$ is a hydrogen atom or a methyl group, $R_2$ is a 2-methyl-1-propenyl group when $R_1$ is a hydrogen atom and a methyl group when $R_1$ is a methyl group, and X is a 2-allyl-3-methyl-cyclopent-2-ene-1-one-4-yl group or a 2-propargyl-3-methyl-cyclopent-2-ene-1-one-4-yl group.

Conventionally, some pyrethroid compounds represented by allethrin-type compounds have been appreciated as active ingredients of heating fumigants such as mosquito coil and mat for electric fumigator to exterminate flying harmful insects such as mosquitos.

However, even these heating fumigants are not usually sufficient in that their initial efficacy is rather poor.

After various studies on fumigating compositions

for exterminating pests having good initial efficacy and stable continuous effect for a relatively long time, these inventors have found that a composition obtained by mixing a pyrethroid-type compound of general formula [I] above and 2,3,4,5,6-pentafluorobenzyl 2,2-dimethyl-3-(2,2-dichlorovinyl)cyclopropanecarboxylate (hereafter referred to as compound A) in a ratio by weight of from 8:2 to 3:7 can be used as a fumigating composition providing a synergistic effect in terms of its efficacy as a fumigant and proper initial efficacy and long-term efficacy, thereby this invention was completed.

As examples of the pyrethroid-type compound of general formula [I] used into composition of this invention, various pyrethroid-type compounds such as the following are listed.

<Allethrin-type Compounds>

(±)-2-allyl-3-methyl-cyclopent-2-ene-1-one-4-yl (±)-cis, trans-chrysanthemate (compound (1)), (±)-2-allyl-3-methyl-cyclopent-2-ene-1-one-4-yl (+)-cis,trans-chrysanthemate (compound (2)), (±)-2-allyl-3-methyl-cyclopent-2-ene-1-one-4-yl (+)-trans-chrysanthemate (compound (3)), (+)-2-allyl-3-methyl-cyclopent-2-ene-1-one-4-yl (+)-cis,trans-chrysanthemate (compound (4)), (+)-2-allyl-3-methyl-cyclopent-2-ene-1-one-4-yl (+)-trans-chrysanthemate (compound (5)), (±)-2-allyl-3-methyl-cyclopent-2-ene-1-one-4-yl 2,2,3,3,-tetramethylcyclopropanecarboxylate (compound (6)), (+)-2-allyl-3-methylcyclopent-2-ene-1-one-4-yl 2,2,3,3-tetramethylcyclopropanecarboxylate (compound (7)).

<Prallethrin-type Compounds>

(±)-2-propargyl-3-methyl-cyclopent-2-ene-1-one-4-yl (±)-cis,trans-chrysanthemate (compound (8)), (±)-2-propargyl-3-methyl-cyclopent-2-ene-1-one-4-yl (+)-cis, trans-chrysanthemate (compound (9)), (±)-2-propargyl-3-methyl-cyclopent-2-ene-1-one-4-yl (+)-trans-chrysanthemate (compound (10)), (+)-2-propargyl-3-methyl-cyclopent-2-ene-1-one-4-yl (+)-cis,trans-chrysanthemate (compound (11)), (+)-2-propargyl-3-methyl-cyclopent-2-ene-1-one-4-yl (+)-trans-chrysanthemate (compound (12)), (±)-2-propargyl-3-methyl-cyclopent-2-ene-1-one-4-yl 2,2,3,3-tetramethylcyclopropanecarboxylate (compound (13)), (+)-2-propargyl-3-methyl-cyclopent-2-ene-1-one-4-yl 2,2,3,3-tetramethylcyclopropanecarboxylate (compound (14)).

As compound A, various compounds such as 2,3,4,5,6-pentafluorobenzyl (±)-cis, trans-2,2-dimethyl-3-(2,2-dichlorovinyl)cyclopropanecarboxylate (compound (15)) and 2,3,4,5,6-pentafluorobenzyl (+)-trans-2,2-dimethyl-3-(2,2-dichlorovinyl)cyclopropanecarboxylate (compound (16)) as well as their optical isomers, stereoisomers and mixtures thereof are listed.

Among these compounds, the following combinations are preferable as the active ingredient in the fumigating composition of this invention from the viewpoint of the practical use and availability of materials, etc.

A combination of compound (2) with compound

(15) or (16).

A combination of compound (3) with compound (16).

A combination of compound (4) with compound (16).

A combination of compound (5) with compound (15) or (16).

A combination of compound (6) with compound (16).

A combination of compound (7) with compound (16).

A combination of compound (11) with compound (15) or (16).

A combination of compound (14) with compound (16).

In the following, the excellent properties of the composition of this invention as an active ingredient for a fumigant will be explained according to examples.

Experimental Example 1

Each acetone solution containing compound (2) alone, compound (15) alone or mixtures of these compounds indicated in Table 1 below was dropped onto and impregnated into mosquito coil bases (mosquito coils without active ingredient) to prepare mosquito coils each containing 0.3% (W/W) of the active ingredient. After the thus prepared mosquito coil was set on a holder and placed on the center of the bottom of a glass chamber of 0.34 $m^3$ capacity, both ends of the mosquito coil were ignited to complete combustion of its whole quantity. After the combustion of the mosquito coil, one group consisting of 20 adults of northern house mosquitos (Culex pipiens pallens) or 20 adults of houseflies (Musca domestica)

were released in a glass chamber, then knocked down insects were successively observed for 20 minutes. The $KT_{50}$ values (time required to knock down 50% of tested insects) were obtained by the conventional method according to the results of experiments each repeated four times. The results are as shown in Table 1.

Table 1

| Ratio of Active Ingredient [Compound (2): Compound (15)] | Insects | | | | | |
|---|---|---|---|---|---|---|
| | Adults of Northern House Mosquitos | | | Adults of House Flies | | |
| | $KT_{50}$ (minutes) | Relative Efficacy | | $KT_{50}$ (minutes) | Relative Efficacy | |
| | | Measured | Theoretical* | | Measured | Theoretical* |
| 10 : 0 | 3.3 | 100 | - | 8.0 | 100 | - |
| 8 : 2 | 1.8 | 183 | 174 | 3.9 | 205 | 180 |
| 7 : 3 | 1.4 | 236 | 211 | 3.3 | 242 | 220 |
| 5 : 5 | 1.0 | 330 | 286 | 2.5 | 320 | 300 |
| 4 : 6 | 0.9 | 367 | 323 | 2.2 | 364 | 340 |
| 3 : 7 | 0.9 | 367 | 360 | 2.0 | 400 | 380 |
| 2 : 8 | 0.8 | 413 | 397 | 1.9 | 421 | 420 |
| 0 : 10 | 0.7 | 471 | - | 1.6 | 500 | - |

* Theoretical value was calculated according to the synergistic effect calculation formula of Yun-Pei Sun et al., J.E.E., 53, 687-891 (1960)

As clearly seen from Table 1 above, synergistic effect was provided when the mixing ratio was in the range of from 8:2 to 3:7.

Experimental Example 2

Each of acetone solution containing compound (11) alone, compound (16) alone or mixture consisting of these compounds in a ratio of 3:1 was dropped onto and impregnated into mosquito coil base to prepare mosquito coils each containing 0.1% (W/W) of the active ingredient.

After 100 adults of northern house mosquitos (Culex pipiens pallens) were released in a chamber of 28 $m^3$ capacity, the mosquito coil one end of which was ignited was set on a holder and placed on the center of the bottom. After the knocked-down insects were successively observed for 60 minutes, the $KT_{50}$ values were obtained by the conventional method. The results are as shown in Table 2.

Table 2

| Active Ingredient | | Knocked-down Rate with Elapsing of Time (%) | | | | | | | $KT_{50}$ (minutes) |
|---|---|---|---|---|---|---|---|---|---|
| Compound | Concentration (%) | 5' | 10' | 20' | 25' | 30' | 45' | 60' | |
| (11) | 0.1 | 2 | 24 | 62 | 74 | 85 | 96 | 100 | 16.2 |
| (16) | 0.1 | 4 | 32 | 68 | 82 | 89 | 98 | 100 | 14.3 |
| (11) + (16) | 0.075 + 0.025 | 7 | 38 | 82 | 93 | 97 | 100 | 100 | 11.4 |

As clearly seen from Table 2 above, the composition of this invention is possessed of a synergistic effect.

Experimental Example 3

40 Parts of each of compounds (3), (11), (15) and (16) or mixtures thereof indicated in Table 3 below, which was used as the active ingredient, was mixed with 10 parts of Yoshinox 425 [2,2'-methylenbis(4-ethyl-6-tert-butylphenol)]. 50 Parts of isopropyl myristate was added to the mixture to prepare premixes for mats for electric fumigator. The thus prepared premix was diluted with Chlorothene Nu and then the diluted premix was dropped onto and impregnated into mats (cotton lint paper) of 22 x 35 mm and 2.8 mm thickness to prepare mats for electric fumigator containing the active ingredient in an amount as shown below. The thus obtained mat was heated on a commercially available heater of electric fumigator (surface temperature, about 160°C) for a given period of time. The active ingredient evaporated from the mat under heating collected by a silica gel trap and was extracted with organic solvent followed by determining the quantity thereof by gas chromatography. The results are shown in Table 3.

Table 3

| Active Ingredient | | | Evaporated Quantity (mg/mat) (Evaporation Rate (%)) | | | Residual Quantity (mg/mat) (Residual Rate (%)) | Loss Rate (%) |
|---|---|---|---|---|---|---|---|
| Compound No. | Set quantity (mg/mat) | Measured (mg/mat) | 0 - 2 hours | 2 - 4 hours | 4 - 8 hours | | |
| (15) | 10 | 10.46 | 9.54 (91.2) | 0.58 (5.5) | 0.33 (3.2) | 0 (0) | 0.1 |
| (3) | 30 | 30.94 | 6.06 (19.6) | 7.48 (24.2) | 8.23 (26.6) | 5.78 (18.7) | 10.9 |
| (15) + | 10 | 10.57 | 5.72 (54.1) | 3.12 (29.5) | 1.20 (11.4) | 0 (0) | 5.0 |
| (3) | 30 | 31.25 | 5.91 (18.9) | 8.10 (25.9) | 9.78 (31.3) | 5.06 (16.2) | 7.7 |
| (16) | 10 | 11.34 | 10.41 (91.8) | 0.61 (5.4) | 0.35 (3.1) | 0 (0) | -0.3 |
| (11) | 30 | 30.20 | 4.78 (15.8) | 5.65 (18.7) | 7.64 (25.3) | 8.28 (27.4) | 12.8 |
| (16) + | 10 | 10.25 | 5.95 (58.0) | 2.64 (25.8) | 1.03 (10.0) | 0 (0) | 6.2 |
| (11) | 30 | 31.78 | 3.97 (12.5) | 5.98 (18.8) | 8.96 (28.2) | 9.77 (30.7) | 9.8 |

-Cont'd-

Table 3 (Cont'd)

| | | | | | | | |
|---|---|---|---|---|---|---|---|
| (15) + (2) | 10 | 11.15 | 6.92 (62.1) | 2.78 (24.9) | 0.98 (8.8) | 0 (0) | 4.2 |
| | 10 | 10.32 | 2.09 (20.3) | 2.76 (26.7) | 3.23 (31.3) | 1.50 (14.5) | 7.2 |
| (16) + (5) | 5 | 5.42 | 3.28 (60.5) | 1.28 (23.6) | 0.69 (12.7) | 0 (0) | 3.2 |
| | 5 | 5.56 | 1.35 (24.3) | 1.45 (26.1) | 1.47 (26.4) | 0.88 (15.8) | 7.4 |
| (16) + (6) | 5 | 5.37 | 3.26 (60.7) | 1.36 (25.3) | 0.49 (9.1) | 0 (0) | 4.9 |
| | 15 | 15.94 | 9.07 (56.9) | 4.70 (25.8) | 2.07 (13.0) | 0 (0) | 4.3 |
| (16) | 5 | 5.53 | 5.10 (92.2) | 0.27 (4.9) | 0.14 (2.5) | 0 (0) | 0.4 |
| (2) | 10 | 10.45 | 4.94 (47.3) | 3.27 (31.3) | 1.10 (10.5) | 0 (0) | 10.9 |
| (5) | 5 | 5.43 | 3.55 (65.4) | 0.86 (15.6) | 0.35 (6.5) | 0 (0) | 12.5 |
| (6) | 15 | 15.63 | 11.30 (72.3) | 2.51 (16.1) | 1.05 (6.7) | 0 (0) | 4.9 |

As indicated in Table 3 above, in the composition of this invention, the evaporation of the active ingredients continued from immediately after up to as much as 8-10 hours after the start of the heating and the volatilized quantity of the active ingredients was kept constant as compared with each single ingredient. Thus it is seen that the composition of this invention is excellent in evaporation pattern.

Experimental Example 4

The insecticidal efficacy of some mats for electric fumigator obtained in Experimental Example 3 was evaluated by the procedures as shown below.

Adults of northern house mosquitos (*Culex pipiens pallens*) or adults of houseflies (*Musca domestica*) were released in a glass chamber of 70 cm square (0.34 $m^3$).

Then, the mat being continuously heated with a heater for electric fumigator was inserted in the chamber for 20 minutes at given intervals and knocked-down insects were observed. The $KT_{50}$ values were obtained by the conventional method according to the results of experiments each repeated four times.

The results are shown in Table 4.

Table 4

| Active Ingredient | $KT_{50}$ (minutes) with Elapsing of Time | | | | | |
|---|---|---|---|---|---|---|
| Compound and Quantity [mg/mat] | Adults of Northern House Mosquitos | | | Adults of Houseflies | | |
| | *1 15 minutes | *2 4 hours | *3 8 hours | *1 15 minutes | *2 4 hours | *3 8 hours |
| (15) 10 | 2.7 | 7.3 | 14.7 | 3.7 | 7.8 | 17.2 |
| (3) 30 | 6.2 | 4.3 | 7.0 | 9.3 | 6.8 | 10.5 |
| {(15) 10 + (3) 30} | 3.2 | 3.0 | 4.2 | 4.7 | 4.4 | 5.9 |
| (16) 5 | 3.0 | 7.5 | >20 | 3.5 | 7.9 | >20 |
| {(16) 5 + (5) 5} | 4.6 | 4.4 | 6.7 | 6.8 | 6.3 | 7.2 |
| (5) 5 | 7.7 | 7.1 | 9.3 | 13.1 | 11.9 | 14.0 |

*1 Indicating the time range of from 15 to 35 minutes.

*2 Indicating the time range of from 3 hours and 40 minutes to 4 hours.

*3 Indicating the time range of from 7 hours and 40 minutes to 8 hours.

As shown in Table 4 above, in the composition of this invention, its insecticidal efficacy was continuously kept high from immediately after up to as much as 8 hours after the start of the heating.

Experimental Example 5

Mats for electric fumigator, each containing

compound (11) alone, compound (16) alone or mixtures thereof in amount as shown in Table 5 below, were prepared in the same manner as Experimental Example 3.

After one group consisting of 20 adults of Houseflies (Musca domestica) were released in a glass chamber of 70 cm square (0.34 $m^3$), each mat for electric fumigator was introduced in the glass chamber for 20 minutes at given time intervals and knocked-down insects were observed. $KT_{50}$ values were obtained by the conventional method according to the resluts of experiments each repeated five times.

The results are shown in Table 5.

Table 5

| Active Ingredient | | $KT_{50}$ (minutes) with Elapsing of Time | | |
|---|---|---|---|---|
| Compound | Quantity (mg/mat) | *1 15 minutes | *2 4 hours | *3 8 hours |
| (11) | 8 | 5.8 | 5.4 | 9.6 |
| (16) | 8 | 3.4 | 7.4 | 15.0 |
| (11) + (16) | 6.4 / 1.6 | 4.5 | 4.6 | 7.4 |
| (11) + (16) | 4 / 4 | 3.7 | 5.0 | 8.0 |
| (11) + (16) | 2.4 / 5.6 | 3.4 | 5.3 | 8.6 |

*1, *2, *3: The same as Table 4 above.

Experimental Example 6

Mosquito coils, each containing compound (11) alone, compound (15) alone or mixtures thereof in the concentrations [%(W/W)] indicated in Table 6 below, were prepared in the same manner as Experimental Example 2.

The $KT_{50}$ values were obtained successively for 60 minutes by the same method as Experimental Example 2 using 100 adults of northern house mosquitos (Culex pipiens pallens) in a chamber of 28 $m^3$ capacity. After the observation of knocked-down insects, all tested insects were collected and put into a cage for observation. After being left for 24 hours while being fed, the number of dead insects was observed to obtain the mortality.

The results are shown in Table 6.

Table 6

| Effective Component: Compound and Concentration (%) | Knocked-down Rate with Elapsing of Time (%) | | | | | | | | $KT_{50}$ (minutes) | Mortality (%) |
|---|---|---|---|---|---|---|---|---|---|---|
| | 7' | 10' | 15' | 20' | 25' | 30' | 45' | 60' | | |
| (11) 0.12 | 0 | 8 | 54 | 94 | 100 | 100 | 100 | 100 | 14.3 | 64 |
| (15) 0.12 | 0 | 1 | 14 | 67 | 91 | 98 | 100 | 100 | 18.5 | 92 |
| (11) 0.096 + (15) 0.024 | 2 | 28 | 78 | 97 | 100 | 100 | 100 | 100 | 12.0 | 88 |
| (11) 0.06 + (15) 0.06 | 4 | 35 | 81 | 97 | 100 | 100 | 100 | 100 | 11.4 | 90 |
| (11) 0.036 + (15) 0.084 | 1 | 8 | 64 | 92 | 99 | 100 | 100 | 100 | 13.9 | 100 |

The fumigating composition of this invention, because of its characteristics, is mainly applied to heating fumigants such as mats for electric fumigator and mosquito coils for exterminating flying harmful insects such as mosquitos and flies as well as cockroaches and insects harmful to stored grain.

In preparing the fumigating compositions of the present invention, the mixtures of active ingredients may be formulated, according to procedures thoroughly known to those skilled in the art using diluents for general insecticides, like in the case of conventional pyrethroids, into various forms of compositions such as heating fumigants (e.g. mosquito coils, mosquito mats for electric fumigator) and premix formulation for preparing them to be put to practical use.

In the compositions of the present invention, the active ingredients are contained in an amount of 0.01 to 90% by weight.

The compositions of the present invention can be enhanced in pesticidal efficacy when used in admixture with such synergists for pyrethroids as α-[2-(2-butoxyethoxy)ethoxy]-4,5-methylenedioxy-2-propyltoluene (hereinafter referred to as "piperonyl butoxide"), N-(2-ethylhexyl)-bicyclo[2,2,1]hepta-5-ene-2,3-dicarboximide (hereinafter referred to as "MGK-264") and octachlorodipropyl ether (hereinafter referred to as "S-421"), or with other known synergists effective for allethrin and pyrethrin.

Generally, chrysanthemic acid ester type compounds are somewhat low in stability to light, heat and oxidation. Accordingly, when antioxidants or ultraviolet absorbers, e.g. phenol derivatives such as BHT (butylated hydroxytoluene), bisphenol derivatives, arylamines such as phenyl-α-naphthylamine, phenyl-ß-naphthylamine or a condensation product between phenetidine and acetone, or benzophenone type compounds are added in suitable amounts as stabilizers to the composition of the present invention, it is possible to obtain fumigating compositions which have been more stabilized in effectiveness.
As to the names of compounds used as the above antioxidant, 2,6-di-tert-butyl-4-methylphenol, 2,2'-methylenbis(6-tert-butyl-4-methylphenol), 2,2'-methylenbis(6-tert-butyl-4-ethylphenol), 4,4'-methylenbis(2,6-di-tert-butylphenol), 4,4'-butylidenbis(6-tert-butyl-3-methylphenol) and 4,4'-thiobis(6-tert-butyl-3-methylphenol) are listed.

The preparation of the composition of this invention will be explained according to examples in the following. But, this invention is not restricted to the following examples.

Example 1

After 0.3 g of BHT was added to each mixture consisting of 0.1 g compound (2), (3), (5), (6), (9) or (11) and 0.05 g compound (15) or (16), the mixture was dissolved in 20 ml of methanol, and then uniformly mixed with 99.55 g of a mosquito coil carrier (a 3:5:1 mixture

of Tabu powder, pyrethrum marc and wood flour). The resulting mixture, after evaporation of methanol, was sufficiently kneaded with 150 ml of water, and then molded and dried to obtain each mosquito coil.

Example 2

80 Parts of each of mixtures indicated in Table 7 below as the active ingredient was mixed with 10 parts of an emulsifier consisting of Himer BLZ (brand name by Matsumoto Yushi company) and Himer 1002Z (brand name by Matsumoto Yushi company) in a ratio of 9.5:0.5. Solvesso 150 (brand name by Esso company) was added to the mixture to make the total amount to 100 parts, thereby premix formulation for preparing of mosquito coil was obtained in the form of emusifiable concentrate.

Table 7

| No. | Blending Ratio in 80 Parts of Active Ingredient | | | | |
|---|---|---|---|---|---|
| | Compound of general formula [I] + Compound A | | | | |
| 1 | Compound (1) | 8 | : | 2 | Compound (15) |
| 2 | Compound (1) | 6 | : | 4 | Compound (15) |
| 3 | Compound (2) | 8 | : | 2 | Compound (15) |
| 4 | Compound (2) | 5 | : | 5 | Compound (15) |
| 5 | Compound (2) | 8 | : | 2 | Compound (16) |
| 6 | Compound (2) | 6 | : | 4 | Compound (16) |
| 7 | Compound (2) | 3 | : | 7 | Compound (16) |
| 8 | Compound (3) | 7.5 | : | 2.5 | Compound (16) |

- cont'd -

Table 7 (con'd)

| | | | | | |
|---|---|---|---|---|---|
| 9 | Compound (3) | 5 | : | 5 | Compound (16) |
| 10 | Compound (3) | 3 | : | 7 | Compound (16) |
| 11 | Compound (4) | 6 | : | 4 | Compound (16) |
| 12 | Compound (5) | 8 | : | 2 | Compound (16) |
| 13 | Compound (5) | 5 | : | 5 | Compound (16) |
| 14 | Compound (5) | 3 | : | 7 | Compound (16) |
| 15 | Compound (6) | 5 | : | 5 | Compound (16) |
| 16 | Compound (7) | 7 | : | 3 | Compound (16) |
| 17 | Compound (8) | 6 | : | 4 | Compound (16) |
| 18 | Compound (9) | 7.5 | : | 2.5 | Compound (16) |
| 19 | Compound (10) | 5 | : | 5 | Compound (16) |
| 20 | Compound (11) | 7 | : | 3 | Compound (15) |
| 21 | Compound (11) | 8 | : | 2 | Compound (16) |
| 22 | Compound (11) | 5 | : | 5 | Compound (16) |
| 23 | Compound (12) | 6 | : | 4 | Compound (15) |
| 24 | Compound (13) | 4 | : | 6 | Compound (16) |
| 25 | Compound (14) | 5 | : | 5 | Compound (16) |

An appropriate amount of the each premix formulation obtained in the above was diluted with 150 ml of water, and then uniformly mixed with a given quantity of the mosquito coil carrier described in Example 1. The resulting mixture was molded and dried to obtain a mosquito coil of a certain concentration. The thus obtained coil, if necessary, may contain small quantities of a pigment such as Malachite Green and an antiseptic such as sodium dehydroacetate or dinitrophenol.

Example 3

After 0.006 g of Yoshinox 425 (the same as mentioned above) was added to each mixture consisting of 0.015 g compound (2), (3), (5), (6), (9), (11) or (13) and 0.01 g compound (15) or (16), the mixture was dissolved in an appropriate amount of chloroform. The thus prepared solution was homogeneously absorbed by cotton lint paper of 22 x 35 mm and 2.8 mm thickness, thereby each fibrous fumigating composition for electric fumigator was obtained. In the fibrous fumigating composition, the fibrous carrier such as glass wool or asbestos having similar properties can be used in addition to a pulp plate such as cotton lint paper or filter paper.

Example 4

40 Parts of each of mixtures indicated in Table 8 below as the active ingredient were mixed with 10 parts of Yoshinox 425 (the same as mentioned above). An organic solvent such as isopropyl myristate, isopropyl palmitate, hexyl laurylate or kerosene was added to the mixture to make the total amount to 100 parts, thereby premix formulations for fibrous fumigating compositions for electric fumigator were obtained.

After the premix formulation obtained in the above was diluted with an appropriate amount of kerosene, a given amount of the thus prepared solution was homogeneously absorbed by a fibrous carrier described in Example 3, thereby each fibrous fumigating composition

for electric fumigator was obtained. The thus obtained composition, if necessary, may contain a small quantity of a perfume or pigment such as allyl aminoanthraquinone, 1,4-diisopropyl aminoanthraquinone, 1,4-diaminoanthraquinone, 1,4-dibutyl–aminoanthraquinone or 1-amino-4-anilinoanthraquinone.

Table 8

| No. | Blending Ratio in 40 Parts of Active Ingredient | | | | |
|---|---|---|---|---|---|
| | Compound of general formula [I] + Compound A | | | | |
| 1 | Compound (1) | 7 | : | 3 | Compound (15) |
| 2 | Compound (1) | 5 | : | 5 | Compound (15) |
| 3 | Compound (1) | 4 | : | 6 | Compound (16) |
| 4 | Compound (2) | 6 | : | 4 | Compound (15) |
| 5 | Compound (2) | 3 | : | 7 | Compound (15) |
| 6 | Compound (2) | 8 | : | 2 | Compound (16) |
| 7 | Compound (2) | 5 | : | 5 | Compound (16) |
| 8 | Compound (3) | 8 | : | 2 | Compound (16) |
| 9 | Compound (3) | 6 | : | 4 | Compound (16) |
| 10 | Compound (3) | 3 | : | 7 | Compound (16) |
| 11 | Compound (4) | 5 | : | 5 | Compound (16) |
| 12 | Compound (5) | 7.5 | : | 2.5 | Compound (15) |
| 13 | Compound (5) | 6 | : | 4 | Compound (16) |
| 14 | Compound (5) | 3 | : | 7 | Compound (16) |
| 15 | Compound (6) | 7 | : | 3 | Compound (16) |
| 16 | Compound (6) | 4 | : | 6 | Compound (16) |
| 17 | Compound (7) | 5 | : | 5 | Compound (16) |

- cont'd -

Table 8 (cont'd)

| | | | | | |
|---|---|---|---|---|---|
| 18 | Compound (8) | 7 | : | 3 | Compound (16) |
| 19 | Compound (9) | 8 | : | 2 | Compound (16) |
| 20 | Compound (9) | 3 | : | 7 | Compound (16) |
| 21 | Compound (10) | 8 | : | 2 | Compound (16) |
| 22 | Compound (11) | 7 | : | 3 | Compound (16) |
| 23 | Compound (11) | 6 | : | 4 | Compound (16) |
| 24 | Compound (11) | 3 | : | 7 | Compound (16) |
| 25 | Compound (12) | 8 | : | 2 | Compound (16) |
| 26 | Compound (12) | 4 | : | 6 | Compound (16) |
| 27 | Compound (13) | 5 | : | 5 | Compound (16) |
| 28 | Compound (14) | 4 | : | 6 | Compound (16) |

WHAT IS CLAIMED IS:

1. A fumigating composition for exterminating pests characterized in that said composition contains a pyrethroid-type compound of general formula,

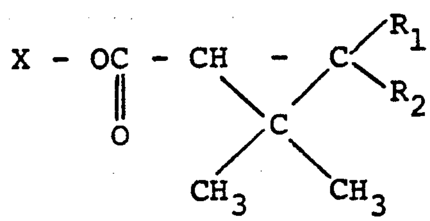

wherein $R_1$ is a hydrogen atom or a methyl group, $R_2$ is a 2-methyl-propenyl group when $R_1$ is a hydrogen atom and a methyl group when $R_1$ is a methyl group, and X is a 2-allyl-3-methyl-cyclopent-2-ene-1-one-4-yl group or a 2-propargyl-3-methylcyclopent-2-ene-1-one-4-yl group; and 2,3,4,5,6-pentafluorobenzyl 2,2-dimethyl-3-(2,2-dichlorovinyl)cyclopropanecarboxylate in a ratio by weight of from 8:2 to 3:7 as active ingredients.

2. The fumigating composition according to Claim 1, wherein the active ingredient is a mixture of (±)-2-allyl-3-methyl-cyclopent-2-ene-1-one-4-yl (+)-cis,trans-chrysanthemate and 2,3,4,5,6-pentafluorobenzyl (±)-cis,trans-2,2-dimethyl-3-(2,2-dichlorovinyl)cyclopropanecarboxylate or 2,3,4,5,6-pentafluorobenzyl (+)-trans-2,2-dimethyl-3-(2,2-dichlorovinyl)cyclopropanecarboxylate.

3. The fumigating composition according to Claim 1, wherein the active ingredient is a mixture of (±)-2-allyl-3-methyl-cyclopent-2-ene-1-one-4-yl (+)-trans-chrysanthemate and 2,3,4,5,6-pentafluorobenzyl (+)-trans-2,2-dimethyl-3-(2,2-dichlorovinyl)cyclopropanecarboxylate.

4. The fumigating composition according to Claim 1, wherein the active ingredient is a mixture of (+)-2-allyl-3-methyl-cyclopent-2-ene-1-one-4-yl (+)-cis,trans-chrysanthemate and 2,3,4,5,6-pentafluorobenzyl (+)-trans-2,2-dimethyl-3-(2,2-dichlorovinyl)cyclopropanecarboxylate.

5. The fumigating composition according to Claim 1, wherein the active ingredient is a mixture of (+)-2-allyl-3-methyl-cyclopent-2-ene-1-one-4-yl (+)-trans-chrysanthemate and 2,3,4,5,6-pentafluorobenzyl (±)-cis,trans-2,2-dimethyl-3-(2,2-dichlorovinyl)cyclopropanecarboxylate or 2,3,4,5,6-pentafluorobenzyl (+)-trans-2,2-dimethyl-3-(2,2-dichlorovinyl)cyclopropanecarboxylate.

6. The fumigating composition according to Claim 1, wherein the active ingredient is a mixture of (±)-2-allyl-3-methyl-cyclopent-2-ene-1-one-4-yl 2,2,3,3-tetramethylcycloproprop anecarboxylate and 2,3,4,5,6-pentafluorobenzyl (+)-trans-2,2-dimethyl-3-(2,2-dichlorovinyl)cyclopropanecarboxylate.

7. The fumigating composition according to Claim 1, wherein the active ingredient is a mixture of (+)-2-allyl-3-methyl-cyclopent-2-ene-1-one-4-yl 2,2,3,3-tetramethylcyclopropanecarboxylate and 2,3,4,5,6-pentafluorobenzyl (+)-trans-2,2-dimethyl-3-(2,2-dichlorovinyl)cyclopropanecarboxylate.

8. The fumigating composition according to Claim 1,

wherein the active ingredient is a mixture of (+)-2-propargyl-3-methyl-cyclopent-2-ene-1-one-4-yl (+)-cis,trans-chrysanthemate and 2,3,4,5,6-pentafluorobenzyl (±)-cis,trans-2,2-dimethyl-3-(2,2-dichlorovinyl)cyclopropanecarboxylate or 2,3,4,5,6-pentafluorobenzyl (+)-trans-2,2-dimethyl-3-(2,2-dichlorovinyl)cyclopropanecarboxylate.

9. The fumigating composition according to Claim 1, wherein the active ingredient is a mixture of (+)-2-propargyl-3-methyl-cyclopent-2-ene-1-one-4-yl 2,2,3,3-tetramethylcyclopropanecarboxylate and 2,3,4,5,6-pentafluorobenzyl (+)-trans-2,2-dimethyl-3-(2,2-dichlorovinyl)-cyclopropanecarboxylate.

0148625

European Patent Office

# EUROPEAN SEARCH REPORT

Application number

EP 84 30 8975

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 093 349 (ROUSSEL-UCLAF) * Claims 1-4,6,8-24 * --- | 1-9 | A 01 N 53/00 // (A 01 N 53/00 A 01 N 53:00 ) |
| A | EP-A-0 061 032 (BAYER) * Page 6, lines 20-28; claims * --- | 1 | |
| A | GB-A-2 025 771 (SUMITOMO CHEMICAL CO. LTD.) * Page 2, lines 34-38; claims * --- | 1-9 | |
| A | RESEARCH DISCLOSURE, no. 222, October 1982, page 342, disclosure no. 22211, Havant, Hampshire, GB; "Insecticidal mixtures" * Lines 1-7, compounds n and q * ----- | 1 | |
| | | | TECHNICAL FIELDS SEARCHED (Int. Cl.4) |
| | | | A 01 N |

The present search report has been drawn up for all claims

| Place of search | Date of completion of the search | Examiner |
|---|---|---|
| THE HAGUE | 10-04-1985 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82